# EUROPEAN PATENT APPLICATION

(11) **EP 2 527 984 A1**
(43) Date of publication of application: **28.11.2012**
(21) Application number: 12161954.8
(22) Date of filing: 29.03.2012
(51) Int. Cl.: G06F 9/54, G06F 9/44, G06F 3/048

(54) **Method and apparatus for editing text using multiple selection and multiple paste**

(30) Priority: 27.05.2011 KR 20110050662
(71) Applicant: Samsung Electronics Co., Ltd., Suwon-si, Gyeonggi-do, 443-742 (KR)
(72) Inventor: Cho, Kyoung-Su, Gyeonggi-do (KR)
(74) Representative: Hutter, Jacobus Johannes

(57) **Abstract**

A method of a mobile terminal for editing using multiple copy or crop operation includes displaying a menu window, and when a user's input for copy or crop via the menu window exists, a highlighting pen icon is displayed to allow the user to select an object to copy or crop via the highlighting pen icon, wherein the selected object(s) is stored for a subsequent paste operation.

## Description

### BACKGROUND OF THE INVENTION

### 1. Field of the Invention

The present invention relates to a method and an apparatus for enabling multiple object selection and paste as well as multiple object copy and crop via a touch-type input.

### 2. Description of the Related Art

Similar to a general Personal Computer (PC), a mobile terminal supports a text copy/crop and paste functions when editing text.

However, since a current text copy/crop and paste function operates with respect to only one unit at one time. Thus, to perform numerous copy/crop operations, a user must repeat an operation of driving a text select function and an operation of pasting text as needed.

*Therefore, a need exists for a method and apparatus for editing text using multiple selection and paste functions.*

### SUMMARY OF THE INVENTION

An aspect of the present invention is to address at least the above-mentioned problems and/or disadvantages and to provide at least the advantages described below. Accordingly, an aspect of the present invention is to provide a method and an apparatus for editing text using multiple selection and multiple paste without the repetitious operations as need in the prior art.

Another aspect of the present invention is to provide a method and an apparatus for enabling multiple object selection and paste including multiple object copy and crop using a touch-type input.

In accordance with an aspect of the present invention, a method for editing using multiple copy or crop includes determining whether an input for multiple copy or crop exists, when the input exists, displaying a menu window for selection, when a user's input for copy or crop via the menu window exists, displaying a highlighting pen icon, allowing the user to select a plurality of objects to copy or crop in sequence via the highlighting pen icon, storing the selected objects.

In accordance with another aspect of the present invention, a method for editing using multiple paste functions includes determining whether an input for multiple paste exists, and if so, displaying a menu window for selection; when a user's input for paste via the menu window is detected, displaying stored at least one object, allowing the user to select one object to paste among the at least one object; and when the user drags the selected object and places the object on a desired position, pasting the selected object(s) on the position.

In accordance with still another aspect of the present invention, an apparatus for editing using multiple copy or crop includes a touch input unit for detecting a user's touch input, a controller for determining whether an input for multiple copy or crop exists, and if so, displaying a menu window; upon detecting a user's input for copy or crop via the menu window, displaying a highlighting pen icon; allowing the user to select a plurality of objects in sequence to copy or crop via the highlighting pen icon; allowing the selected object(s) to be stored, and a storage for storing the selected object(s).

In accordance with yet another aspect of the present invention, an apparatus for editing using multiple paste includes a touch input unit for providing a user's touch input, a controller for determining whether an input for multiple paste exists, and if so, displaying a menu window for selection; upon detecting a user's input for paste via the menu window, displaying stored at least one object to allow the user to select one object to paste among the at least one object; when the user drags the selected object and places the object on a desired position, pasting the selected object on the position, and a storage for storing the object.

Other aspects, advantages and salient features of the invention will become apparent to those skilled in the art from the following detailed description, which, taken in conjunction with the annexed drawings, discloses exemplary embodiments of the invention.

### BRIEF DESCRIPTION OF THE DRAWINGS

The above and other aspects, features and advantages of certain exemplary embodiments of the present invention will be more apparent from the following description taken in conjunction with the accompanying drawings in which:
FIG. 1 is a flowchart illustrating a multiple copy/crop operation process according to an exemplary embodiment of the present invention;
FIG. 2 is a flowchart illustrating a multiple paste operation process according to an exemplary embodiment of the present invention;
FIG. 3 is a block diagram illustrating an apparatus for supporting multiple copy/crop and multiple paste functions according to an exemplary embodiment of the present invention;
FIG. 4 is a block diagram illustrating a mobile terminal for supporting multiple copy/crop and multiple paste functions according to an exemplary embodiment of the present invention;
FIG. 5 is a view illustrating a multiple copy/crop operation process according to an exemplary embodiment of the present invention; and
FIG. 6 is a view illustrating a multiple paste operation process according to an exemplary embodiment of the present invention.

Throughout the drawings, like reference numerals will be understood to refer to like parts, components and structures.

### DETAILED DESCRIPTION OF EXEMPLARY EMBODIMENTS

The following description with reference to the accompanying drawings is provided to assist in a comprehensive understanding of exemplary embodiments of the invention as defined by the claims and their equivalents. It includes various specific details to assist in that understanding but these are to be regarded as merely exemplary. Accordingly, those of ordinary skill in the art will recognize that various changes and modifications of the embodiments described herein can be made without departing from the scope and spirit of the invention. Also, descriptions of well-known functions and constructions are omitted for clarity and conciseness.

The terms and words used in the following description and claims are not limited to the bibliographical meanings, but, are merely used by the inventor to enable a clear and consistent understanding of the invention. Accordingly, it should be apparent to those skilled in the art that the following description of exemplary embodiments of the present invention are provided for illustration purpose only and not for the purpose of limiting the invention as defined by the appended claims and their equivalents.

It is to be understood that the singular forms "a," "an," and "the" include plural referents unless the context clearly dictates otherwise. Thus, for example, reference to "a component surface" includes reference to one or more of such surfaces.

By the term "substantially" it is meant that the recited characteristic, parameter, or value need not be achieved exactly, but that deviations or variations, including for example, tolerances, measurement error, measurement accuracy limitations and other factors known to skill in the art, may occur in amounts that do not preclude the effect the characteristic was intended to provide.

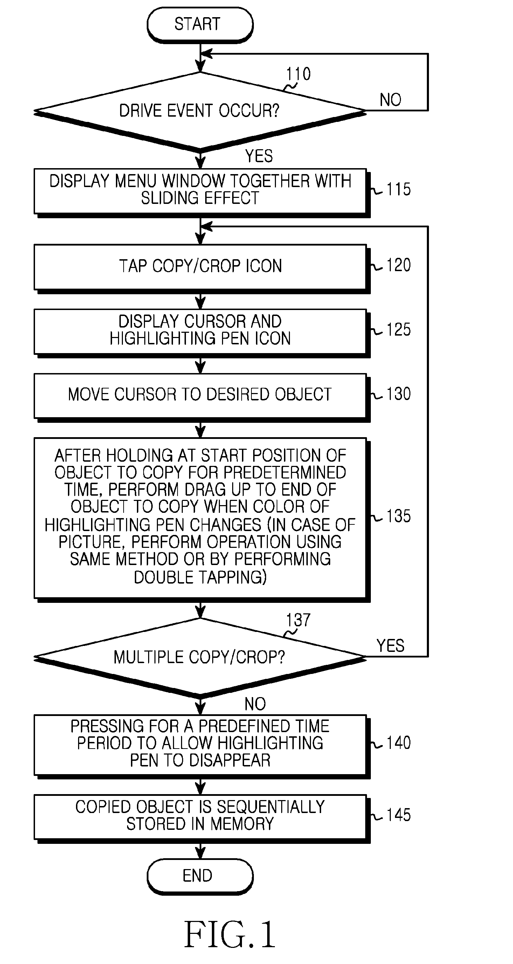

FIG. 1 is a flowchart illustrating a multiple copy/crop operation process in a terminal according to an exemplary embodiment of the present invention.

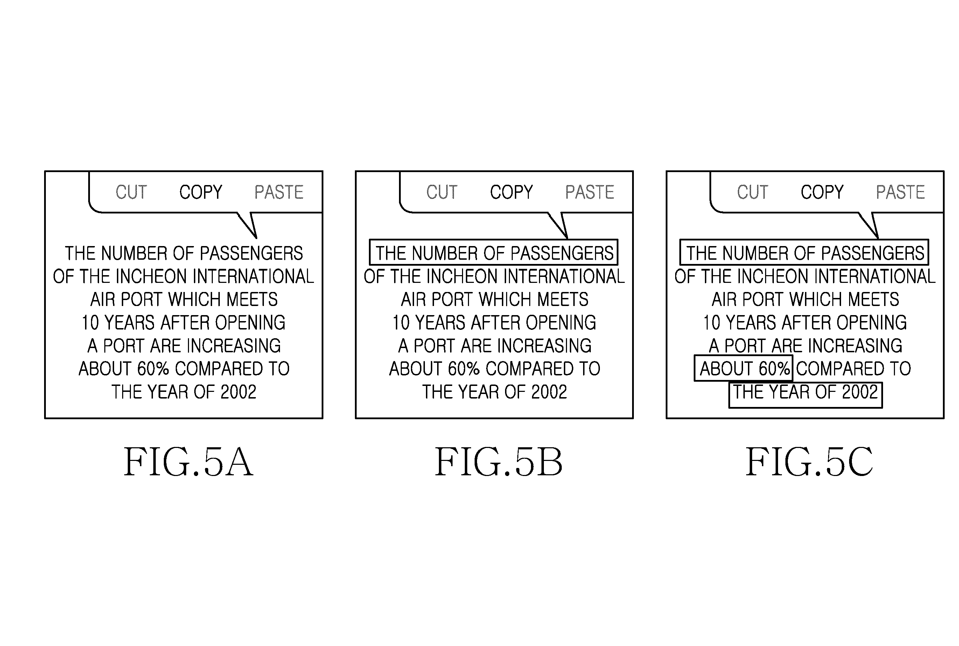

Referring to FIG. 1, when a drive event occurs (step 110), an apparatus/terminal having a touch screen according to an exemplary embodiment of the present invention displays a menu window with a sliding effect (step 115) on a display, as illustrated in FIG. 5A.

Here, the drive event may represents a mode when the terminal detects that a user taps and holds/presses the screen for a predetermined time period. Alternatively, the drive event may represents a mode when the terminal detects an activation of a dedicated hardware button for driving a copy/crop function.

Thereafter, when detecting that the user taps a copy or crop icon (step 120), the terminal displays a cursor and/or a highlighting pen icon on the screen (step 125).

After the user moves a cursor to an object (here, text or picture) which the user wants to copy/crop (step 130), and when the apparatus detects that the user performs a tap operation at a start position for a predetermined time (about one second), the apparatus changes the color of a highlighting pen icon to indicate the activation of copy/crop operation. Thereafter, when detecting that the user performs a drag operation from a start position of an object to an end position using the highlighting pen icon on the cursor and performs a release operation (an operation of taking a hand off the screen), the apparatus selects the portion of the text covered by the drag operation by the user as illustrated in FIG. 5B. When detecting the release, the apparatus stores the selected object in a memory. In case of a picture, the apparatus may store the picture object in the memory using the same method or by double-tapping and selecting the picture (step 135).

In case of multiple copy/crop (step 137), processes from step 120 are repeatedly performed, and a result thereof is illustrated in FIG. 5C.

Finally, when detecting that the user performs pressing the screen for a predefined time period the apparatus may terminate the copy/crop operation by allowing the highlighting pen icon to disappear (step 140). Alternatively, the user can activate a dedicated button on the terminal to exit the copy/crop operation mode.

When the multiple copy/crop operation is completed, the apparatus sequentially stores the copied/cropped object in the memory (step 145).

FIG. 5 illustrates a case of copy, but one skilled in the art can readily appreciate that the above teachings of copy operation can be easily adopted in the crop operation. In case of the crop operation, the original copy would be deleted.

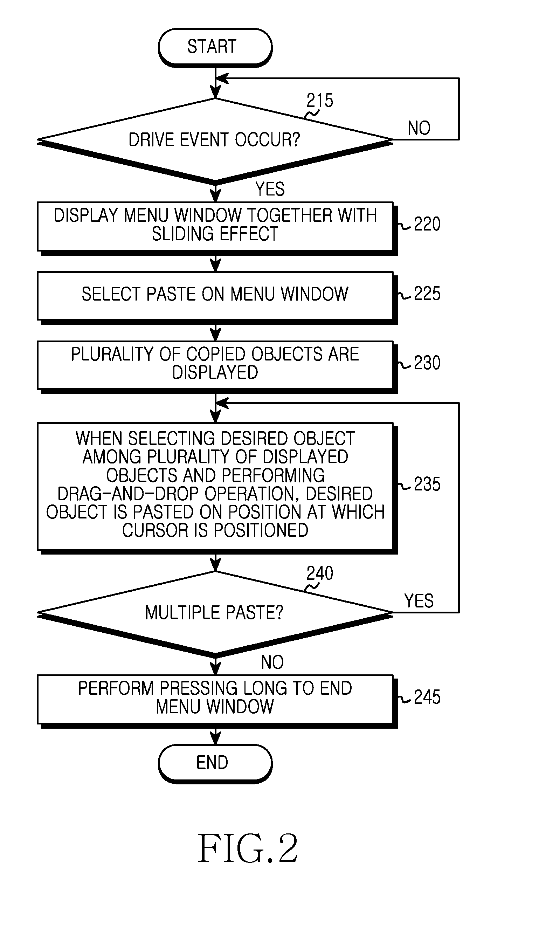

FIG. 2 is a flowchart illustrating a multiple paste operation process in a terminal according to an exemplary embodiment of the present invention.

Referring to FIG. 2, when detecting a user's drive event (step 215), the apparatus/terminal having a touch screen according to the present invention displays a menu window together with a sliding effect (step 220).

Here, the drive event may represents a mode when the apparatus detects a user taps and holds operation for a predefined time period on a screen.

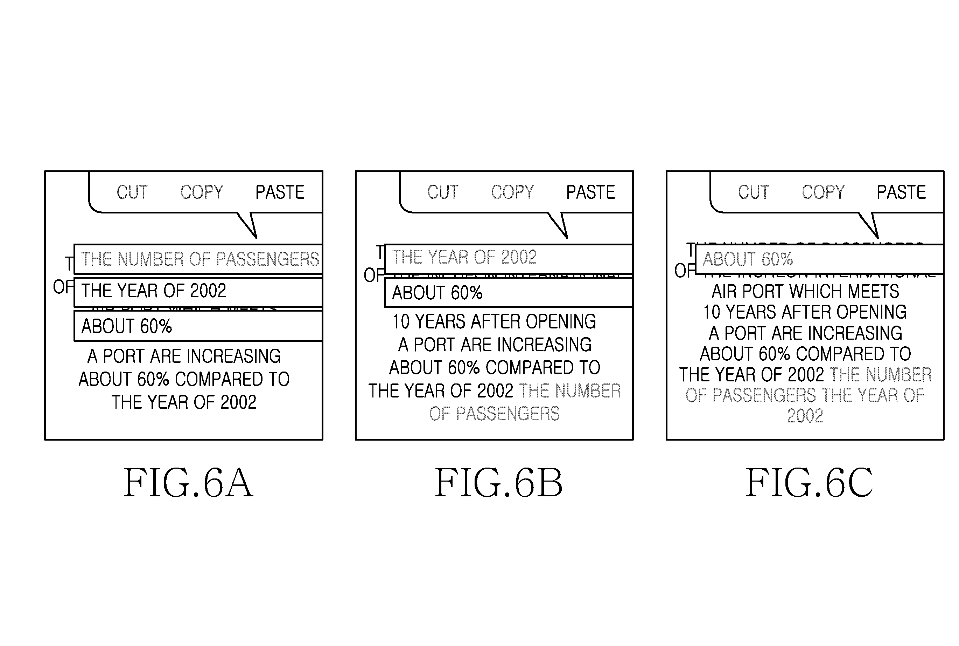

Upon detecting that the user selects a paste function on the menu window (step 225), the apparatus displays a plurality of objects stored in a memory, as illustrated in FIG. 6A (step 230).

Thereafter, when detecting that the user selects a desired object among the plurality of objects and performs a drag-and-drop operation on a desired position, the apparatus pastes the object on the desired position (the position at which the cursor is positioned), as illustrated in FIG. 6B (step 235).

When a plurality of paste operations are desired (step 240), the user selects a desired object again among the plurality of objects, and when detecting that the user performs a drag-and-drop operation on a desired position, the apparatus pastes the object on the desired position (the position at which the cursor is positioned), as illustrated in FIG. 6C (step 235).

When a plurality of paste operations are not desired (step 240), the user presses the screen for a predetermined time period, and in response, the apparatus may terminate the process by allowing the menu window to disappear (step 245).

In the embodiment, the selected object may be deleted from the storage after the selected object is pasted.

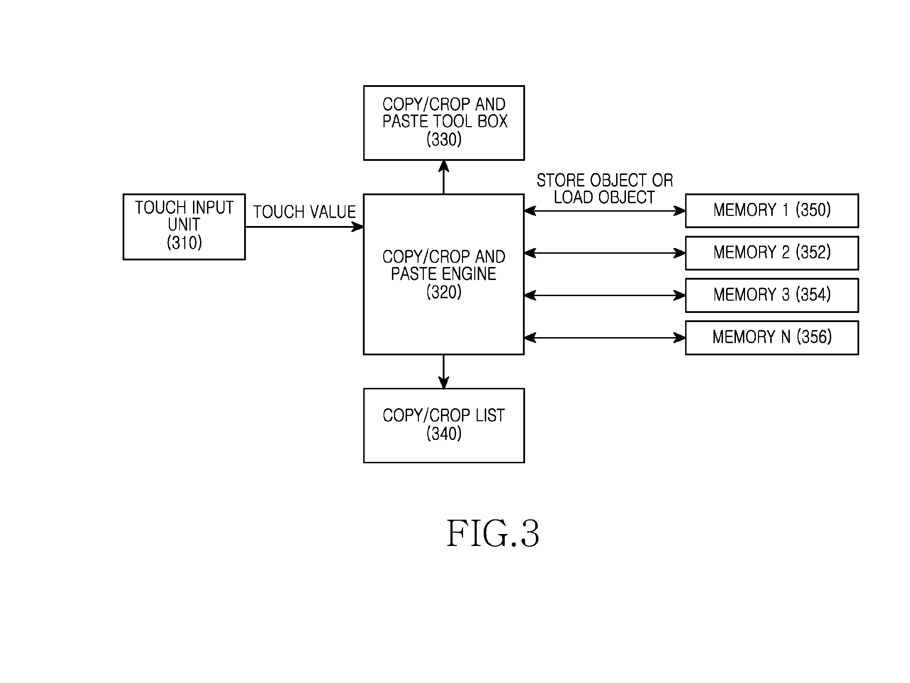

FIG. 3 is a block diagram illustrating an apparatus for supporting multiple copy/crop and multiple paste functions according to an exemplary embodiment of the present invention.

Referring to FIG. 3, the apparatus includes a touch input unit 310, a copy/crop and paste engine 320, a copy/crop and paste tool box 330, a copy/crop list 340, and a plurality of memories 350 to 356.

The touch input unit 310 provides a user's touch input to the copy/crop and paste engine 320.

The copy/crop and paste engine 320 serves as a main module performing the operations of FIGS. 1 and 2, and drives the copy/crop and paste tool box 330 and the copy/crop list 340, which are the menu window displayed on the screen. The copy/crop and paste tool box 330 and the copy/crop list 340 correspond to an interface with a user.

The copy/crop list 340 includes a plurality of displayed lists stored in the plurality of memories 350 to 356 received via the copy/crop and paste engine 320 during a paste operation, and an object by a user's selection is pasted on a position desired by the user.

The plurality of memories 350 to 356 store a copied/cropped object. Alternatively, the copy/crop and paste engine 320 loads a relevant object and provides the same to the copy/crop and paste tool box 330.

During the copy/crop process, when a drive event occurs, the copy/crop and paste engine 320 controls the copy/crop and paste tool box 330 as illustrated in FIG. 5A together with a sliding effect to display a menu window. Here, the drive event may represents a mode when the apparatus detects that a user taps and holds/presses the screen for a predefined time period. Alternatively, the drive event may represents a mode when the apparatus detects an activation of an exclusive hardware button for driving a copy/crop function.

Thereafter, when detecting the user taps a copy or crop icon, the copy/crop and paste engine 320 controls the copy/crop and paste tool box 330 to display a cursor and a highlighting pen icon on the screen.

After the user moves a cursor to an object (here, text or picture) which the user wants to copy/crop (step 130), when the apparatus detects that the user performs a tap operation at a start position for a predetermined time (about one second), the copy/crop and paste engine 320 controls the copy/crop and paste tool box 330 to change the color of the highlighting pen icon.

After that, when detecting that the user performs a drag operation from a start position of an object to copy to an end position using the highlighting pen icon on the cursor and performs a release operation (an operation of taking a hand off the screen), the copy/crop and paste engine 320 selects the dragged portion as illustrated in FIG. 5B.

Also, when detecting a release, the copy/crop and paste engine 320 stores the selected object in the plurality of memories 350 to 356. In case of a picture, the apparatus may store the object in the plurality of memories 350 to 356 using the same method or by double-tapping and selecting the picture.

In case of multiple copy/crop, the above-described processes are repeatedly performed, and a result thereof is illustrated in FIG. 5C.

When detecting that a user activates the screen, the copy/crop and paste engine 320 controls the copy/crop and paste tool box 330 to allow the highlighting pen icon to disappear, thereby ending the copy/crop operation.

In case of multiple copy/crop, the copy/crop and paste engine 320 sequentially stores a copied/cropped object in the plurality of memories 350 to 356.

During a paste operation, when detecting a user's drive event, the copy/crop and paste engine 320 controls the copy/crop and paste tool box 330 to display a menu window together with a sliding effect. Here, occurrence of a drive event may denote that the apparatus detects that a user taps and holds (presses long) a screen.

Thereafter, when detecting that the user selects paste on the menu window, the copy/crop and paste engine 320 controls the copy/crop and paste tool box 330 to display a plurality of objects stored in the plurality of memories 350 to 356 as illustrated in FIG. 6A.

When detecting that the user selects a desired object among the plurality of objects and performs a drag-and-drop operation on a desired position, the copy/crop and paste engine 320 controls the copy/crop and paste tool box 330 to paste the object on the desired position (the position at which the cursor is positioned) as illustrated in FIG. 6B.

When a plurality of paste operations are desired, when detecting that a user selects a desired object among the plurality of objects again and performs a drag-and-drop operation on a desired position, the copy/crop and paste engine 320 controls the copy/crop and paste tool box 330 to paste the object on the desired position (the position at which the cursor is positioned). as illustrated in FIG. 6C.

When the plurality of paste operations are not desired, the user presses the screen for a finite period, and in response the copy/crop and paste engine 320 controls the copy/crop and paste tool box 330 to allow the menu window to disappear, thereby ending the process.

After the selected object is pasted, the copy/crop and paste engine 320 may delete the selected object from the plurality of memories 350 to 356.

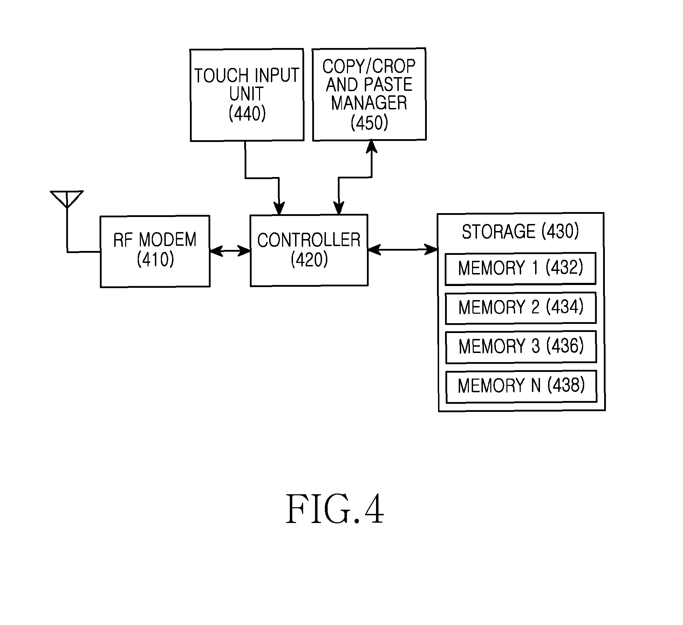

FIG. 4 is a block diagram illustrating a mobile terminal for supporting multiple copy/crop and multiple paste functions according to an exemplary embodiment of the present invention.

Referring to FIG. 4, the mobile terminal may include a Radio Frequency (RF) modem 410, a controller 420, a storage 430, a touch input unit 440, and a copy/crop and paste manager 450. The controller 420 may include the copy/crop and paste manager 450.

The RF modem 410 serves as a module for communicating with other devices, and includes a radio processor, a baseband processor, etc. The radio processor changes a signal received via an antenna into a baseband signal and provides the same to the baseband processor, and changes a baseband signal from the baseband processor to a radio signal so that it can be transmitted on an actual radio path, and transmits the same via the antenna.

The controller 420 controls an overall operation of the mobile terminal, and particularly, controls the copy/crop and paste manager 450 according to the present invention.

The storage 430 stores a program for controlling an overall operation of the mobile terminal and stores temporary data occurring during execution of a program. More particularly, the storage 430 includes a plurality of memories 432 to 438 to store or load a copied/cropped object to provide the same to the controller 420.

The touch input unit 440 provides a user's touch input to the controller 420.

The copy/crop and paste manager 450 includes the copy/crop and paste tool box 330, the copy/crop and paste engine 320, and the copy/crop list 340 of FIG. 3, and performs a relevant function.

The present invention has an advantage of providing convenience to a user by providing a method and an apparatus for multiple object selection and multiple object paste operations including multiple object copy and multiple object crop operations to enhance the convenience of users during edit mode.

The above-described methods according to the present invention can be implemented in hardware, firmware or as software or computer code that can be stored in a recording medium such as a CD ROM, an RAM, a floppy disk, a hard disk, or a magneto-optical disk or computer code downloaded over a network originally stored on a remote recording medium or a non-transitory machine readable medium and to be stored on a local recording medium, so that the methods described herein can be rendered in such software that is stored on the recording medium using a general purpose computer, or a special processor or in programmable or dedicated hardware, such as an ASIC or FPGA. As would be understood in the art, the computer, the processor, microprocessor controller or the programmable hardware include memory components, e.g., RAM, ROM, Flash, etc. that may store or receive software or computer code that when accessed and executed by the computer, processor or hardware implement the processing methods described herein. In addition, it would be recognized that when a general purpose computer accesses code for implementing the processing shown herein, the execution of the code transforms the general purpose computer into a special purpose computer for executing the processing shown herein.

Although the invention has been shown and described with reference to certain exemplary embodiments thereof, it will be understood by those skilled in the art that various changes in form and details may be made therein without departing from the spirit and scope of the invention as defined by the appended claims and their equivalents. Therefore, the scope of the present invention should not be limited to the above-described embodiments but should be determined by not only the appended claims but also the equivalents thereof.

## Claims

1. An apparatus for editing content of a mobile terminal, **characterized by**:
a touch input unit (440) for detecting a touch input; and
a controller (420) for displaying a menu window including at least a copy or crop mode, displaying a highlighting pen icon when the copy or crop mode is selected; selecting a plurality of objects to copy or crop via the highlighting pen icon in sequence; and storing the plurality of objects selected in a memory for a subsequent retrieval.

2. The apparatus of claim 1, **characterized in that** the storing of the plurality of objects is performed sequentially.

3. The apparatus of claim 1, **characterized in that** the displaying of the menu window comprises displaying the menu window together with a sliding effect.

4. A method for editing content of a mobile terminal screen, **characterized by**:
displaying a menu window including at least a copy or crop mode;
displaying a highlighting pen icon when the copy or crop mode is selected;
selecting a plurality of objects to copy or crop via the highlighting pen icon in sequence; and
storing the plurality of objects selected in a memory for a subsequent retrieval..

5. The method of claim 4, further comprising activating a button input for the copy or crop mode.

6. The method of claim 4, **characterized in that** the displaying of the menu window comprises displaying the menu window together with a sliding effect.

7. The method of claim 4, **characterized in that** allowing the user to select each of the plurality of objects using a drag operation.

8. The method of claim 4, **characterized in that** the storing of the plurality of objects is performed sequentially.

9. The method of claim 4, further comprising terminating the paste mode when the screen is activated for a predetermined time period.

10. An apparatus for editing content of a mobile terminal screen, **characterized by**:
a touch input unit (440) for detecting a touch input;
a controller (420) for displaying a menu window at least one paste mode; displaying at least one object when the paste mode is selected; and allowing the user to select the at least one object to paste, in sequence, to a desired location on the screen.

11. The method of claim 10, **characterized in that** the storing of the plurality of objects is performed sequentially.

12. A method for editing content of a mobile terminal screen, **characterized by**:
displaying a menu window at least one paste mode;
displaying stored at least one object when the paste mode is selected;
and
selecting at least one object to paste to a desired location in sequence on the screen.

13. The method of claim 12, **characterized in that** the displaying of the menu window comprises displaying the menu window together with a sliding effect.

14. The method of claim 12, further comprising terminating the paste mode when the screen is activated for a predetermined time period.

15. The method of claim 12, further comprising deleting the selected object from a storage (430) in sequence after each selected object is pasted.
